# EUROPEAN PATENT APPLICATION

(11) **EP 4 328 715 A1**
(43) Date of publication of application: **28.02.2024**
(21) Application number: 23192088.5
(22) Date of filing: 18.08.2023
(51) Int. Cl.: G06F 3/01, G02B 27/00, G02B 27/01

(54) **HEADSET ADJUSTMENT**

(30) Priority: 24.08.2022 US 202217894470
(71) Applicant: Meta Platforms Technologies, LLC, Menlo Park, CA 94025 (US)
(72) Inventor: MODEL, Dmitri, Menlo Park (US); POPHAM, Jacob Dean, Menlo Park (US); KELLER, Blaze Michael, Menlo Park (US)
(74) Representative: Murgitroyd & Company

(57) **Abstract**

A method includes detecting that a user has donned a headset, capturing eye-tracking data of the user's eyes using sensors, using the eye-tracking data to estimate six degrees-of-freedom offsets between the headset as donned and a predefined optimal donning position, using facial landmarks in images of a lower portion of the user's face obtained by cameras to estimate a pitch offset between the headset as donned and the predefined optimal donning position, and generating, based on the six degrees-of-freedom offsets and pitch offset, instructions to guide the user to adjust the headset to be closer to the predefined optimal donning position. A system and computer-readable non-transitory storage media to implement the method are described.

## Description

### TECHNICAL FIELD

This disclosure generally relates to headsets or head-mounted displays and methods for aiding a user in optimizing their fit. This disclosure relates additionally to computer-readable non-transitory storage media and systems for the implementation of such methods.

### BACKGROUND

Wearable display systems, such as head-mounted displays (HMDs) and near-eye displays (NEDs), can be used to present virtual scenery and objects to a user, or to augment real-life environments with dynamic information, data, or virtual objects. Virtual reality (VR) or artificial reality (AR) scenery can be three-dimensional (3D) to enhance the experience and to match virtual objects to real objects observed by a user. Eye position, gaze direction, and/or orientation of the user may be tracked in real time, and the displayed scenery and/or objects may be dynamically adjusted depending on the user's head orientation and gaze direction, to provide a better experience of immersion into a simulated or augmented environment. Some wearable display systems further include a camera aimed at a lower portion of the face of the user to capture, and sometimes reproduce, personalized facial expressions.

The placement of a wearable display system and its individual components (camera, sensors, etc.) often has a "sweet spot." For a portion focused on the user's eyes, this "sweet spot" may be. i.e., a geometric area for a user's eye and where the views of the virtual or augmented scenery are optimal in terms of image quality, field of view, image artifacts, eye tracking accuracy and fidelity, etc. To achieve this, adjustments may be necessary around one or both eyes of the user. This task may be difficult to achieve in practice in view of a great variety of people's head shapes and inter-pupillary distances (IPDs), and different facial features such as eye recess, forehead and nose protrusion, etc. Furthermore, one or more of the cameras and or sensors aimed at the lower face may have an optimal position/placement/angle. For this, too, there may be a "sweet spot," where the placement of cameras and sensors is optimal in terms being capable of accurately capturing data necessary to provide a desired experience to a user.

### SUMMARY OF PARTICULAR EMBODIMENTS

In accordance with the invention in a first aspect, a computer-implemented method comprises:
detecting that a user has donned a headset;
using eye-tracking sensors of the headset to capture eye-tracking data of the user's eyes;
using cameras of the headset to capture images of a lower portion of the user's face;
using the eye-tracking data to estimate six degrees-of-freedom (6DoF) offsets between the headset worn by the user and a predefined optimal donning position of the headset, the 6DoF offsets including three translation offsets, a roll offset, a yaw offset, and an inter-pupillary distance (IPD) offset;
using facial landmarks in the images to estimate a pitch offset indicating a difference in pitch between the headset worn by the user and the predefined optimal donning position of the headset;
generating, based on the 6DoF offsets and the pitch offset, one or more users instructions to guide the user to adjust the headset to be closer to the predefined optimal donning position of the headset.

In some embodiments of the method, the offset of the current eye position is determined by engaging an eye tracking program that detects pupil location to six degrees of freedom.

In some embodiments, the generated instructions include adjusting roll and yaw.

In some embodiments, the pitch offset value is determined by detecting one or more landmarks on the face of the user.

In some embodiments, the optimal face position is set to a default in response to a determination that one or more of the one or more landmarks on the face of the user do not fall within limits of the camera for detection.

In some embodiments, the method begins in response to the user opening an application.

In some embodiments, a program is engaged before the method begins and ends after a determination that the offset of the current eye position and the pitch offset are within set parameters,

In some embodiments, the determining of the direction of adjustment of the headset to lessen the offset of the current eye position and the determining of the direction of adjustment of the headset to lessen the pitch offset is done simultaneously.

In accordance with the invention in a second aspect, one or more computer-readable non-transitory storage media embodying software that is operable when executed to perform the method of the first aspect.

In some embodiments, one or more computer-readable non-transitory storage media embodying software that is operable when executed to:
detect that a user has donned a headset;
use eye-tracking sensors of the headset to capture eye-tracking data of the user's eyes;
use cameras of the headset to capture images of a lower portion of the user's face;
use the eye-tracking data to estimate six degrees-of-freedom (6DoF) offsets between the headset worn by the user and a predefined optimal donning position of the headset, the 6DoF offsets including three translation offsets, a roll offset, a yaw offset, and an inter-pupillary distance (IPD) offset;
use facial landmarks in the images to estimate a pitch offset indicating a difference in pitch between the headset worn by the user and the predefined optimal donning position of the headset;
generate, based on the 6DoF offsets and the pitch offset, one or more users instructions to guide the user to adjust the headset to be closer to the predefined optimal donning position of the headset.

In some embodiments, the software is further operable when executed to determine the offset of the current eye position by engaging an eye tracking program that detects pupil location to five degrees of freedom.

In some embodiments, the generated instructions include adjusting roll and yaw.

In some embodiments, the pitch offset value is determined by detecting one or more landmarks on the face of the user.

In some embodiments, the optimal face position is set to a default in response to a determination that one or more of the one or more landmarks on the face of the user do not fall within limits of the camera for detection.

In some embodiments, the software is further operable when executed to determine the direction of adjustment of the headset to lessen the offset of the current eye position and determine the direction of adjustment of the headset to lessen the pitch offset simultaneously.

In accordance with the invention in a third aspect, a system comprises one or more processors and one or more computer-readable non-transitory storage media of the second aspect and/ or embodying software that is operable when executed to perform the method of the first aspect,

In some embodiments, a system comprises:
one or more processors; and

one or more computer-readable non-transitory storage media embodying software that is operable when executed to:
detect that a user has donned a headset;
use eye-tracking sensors of the headset to capture eye-tracking data of the user's eyes;
use cameras of the headset to capture images of a lower portion of the user's face;
use the eye-tracking data to estimate six degrees-of-freedom (6DoF) offsets between the headset worn by the user and a predefined optimal donning position of the headset, the 6DoF offsets including three translation offsets, a roll offset, a yaw offset, and an inter-pupillary distance (IPD) offset;
use facial landmarks in the images to estimate a pitch offset indicating a difference in pitch between the headset worn by the user and the predefined optimal donning position of the headset;
generate, based on the 6DoF offsets and the pitch offset, one or more users instructions to guide the user to adjust the headset to be closer to the predefined optimal donning position of the headset.

In some embodiments, the software is further operable when executed to determine the offset of the current eye position by engaging an eye tracking program that detects pupil location to five degrees of freedom.

In some embodiments, the generated instructions include adjusting roll and yaw.

In some embodiments, the pitch offset value is determined by detecting one or more landmarks on the face of the user.

In some embodiments, the optimal face position is set to a default in response to a determination that one or more of the one or more landmarks on the face of the user do not fall within limits of the camera for detection.

In some embodiments, the determining of the direction of adj ustment of the headset to lessen the offset of the current eye position and determine the direction of adjustment of the headset to lessen the pitch offset value is done simultaneously.

This disclosure describes a method of determining the proper fit of a headset for use with VR/AR programs. This method may involve using a program that relies on offsets from seven degrees of freedom, offsets for six degrees of freedom from eye tracking and an offset from pitch from face tracking, all obtained from both sensors directed at the eyes of a user and cameras positioned to capture images of a lower portion of the user's face. An embodiment involves running a program after a computer has detected that the user has donned the headset. After the program has detected that the user has donned the head set, eye tracking data, obtained from the eye-tracking sensors, may be used to estimate six degrees-of-freedom (6DoF) offsets between the headset worn by the user and optimal donning position of the headset that has been predefined. The 6DoF offsets may include three translation offsets (horizontal, vertical, depth), a roll offset, a yaw offset, and an inter-pupillary distance (IPD) offset. The translation offsets may be up/down, left/right, and front/back in relation to the user's face. The roll offset may represent the distance or angle a headset is tilted off-center from one ear of a user to the other ear of the user. In other words, this may be the offset along the longitudinal axis or that drawn through the head from the right to left ear or vice versa. The yaw offset may represent the distance or angle a headset is spun off-center around the user's head, such as if the user's neck were the axis, also known as the vertical axis. The IPD offset may represent the difference between the inter-axial distance (IAD), or the spacing between left and right eyecups, and the user's inter-pupillary distance (IPD). In addition to the 6DoF, the program may estimate a pitch offset using facial landmarks within the images, the pitch offset indicating a difference in pitch between the headset worn by the user and the optimal donning position of the headset that has been predefined. The pitch offset may be the distance or angle off center of the middle of a user's head, as though rotating along an axis drawn through the user's nose to the back of their head. In an embodiment, these estimated offsets (6DoF offsets and pitch offset) may be used to generate one or more instructions to display to the user, which instructions detail how the user can adjust the headset to be closer to the predefined optimal donning position of the headset, therefore acting as a guide to the user.

The embodiments disclosed herein are only examples, and the scope of this disclosure is not limited to them. Particular embodiments may include all, some, or none of the components, elements, features, functions, operations, or steps of the embodiments disclosed herein. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

FIG. 1 illustrates an example head-mounted device, also known as a headset, for a VR/AR display system.
FIG. 2 illustrates an example method for headset donning optimization.
FIG. 3 illustrates an example method of optimizing the fit of a headset using a computer.
FIG 4. illustrates instructions that a program may implement for different types of donning guidance that may be used as part of this method.
FIG. 5 illustrates an example computer system.

### DESCRIPTION OF EXAMPLE EMBODIMENTS

The present disclosure describes a method for a system run by a computer to ensure that users optimally don their headsets. For purposes of clarity and efficiency and not by way of limiting, such a system will be called "Headset Adjustment" throughout this disclosure. The guidance may provide the benefits of any or all of: 1) ensuring that users have an optimal viewing experience while using the headset, 2) ensuring the face-tracking system can properly see the face (especially the lower face) to provide a better experience for Social Presence, and 3) ensuring that the eye tracking system can properly see the eyes to provide a better experience for Social Presence and Gaze Foveated Rendering (GFR) or any other application that uses eye-tracking. Social Presence is a part of the VR/AR experience that creates a more accurate representation of the user to make a virtual experience closer to a real-life experience. In order for there to be good Social Presence, an avatar associated with a user must look like the user. In the present disclosure, facial features, which may be detected and tracked by one or more cameras on a head-mounted device allow a computer program generating an avatar to create the avatar to look more like the user, including both facial features and facial expressions. In order for the one or more cameras to create an accurate representation of the user's facial features and facial expressions, the one or more cameras must be positioned so as to be able to capture the features and expressions. Thus, there is a need for a method or system that uses a computer program to provide instructions to a user to correct fit.

As explained above, virtual and artificial reality devices have the capability of creating Social Presence, aiding in creating the feeling of a more natural social experience. In order to maximize the effect of the Social Presence, a user's facial features and expressions may be captured in real time. This allows a computing system to more accurately replicate both the look of a user and the changing facial expressions of the user. In order to accurately capture both, a headset must be in the proper position. Thus, in some embodiments, instructions may be generated and presented to the user to help the user obtain an optimal position. Furthermore, the present disclosure increases both the comfort and quality of experience in other ways. The quality of experience can be increased, for example, by better capturing movement and motion of the user. However, if the generation and presentation of the instructions is not done efficiently, the instructions can become tedious and get in the way of the user experience. Thus, this disclosure presents an approach to headset correction that balances these concerns.

In accordance with the present disclosure, information obtainable from sensor(s) of a wearable display headset may be used to facilitate a correct placement of the headset on a user's head, and a correct adjustment of the headset. For example, a sensor such as an eye tracking camera may be used to, e.g., adjust the distance between the display modules or display module portions presenting images to each eye to correspond to the inter-pupillary distance (IPD) of the current user. This information may also be used to guide the user to adjust the headset location on the user's head. The adjustment may be manual or automatic. Additionally, or alternatively, the ET-estimated pupil position may be used to electronically steer where the original, or (0,0) coordinates, of each display panel are, such that the virtual world may be rendered from the perspective of the user's actual eye position rather than a nominal eye position.

In accordance with the present disclosure, there is provided a method for a headset adjustment, the headset comprising a sensor and a display module comprising an electronic display for displaying images to a user, the method comprising using the sensor to determine an offset of a current eye position of the user wearing the headset relative to an optimal eye position in an eyebox of the headset and an offset of a current face position of the user wearing the headset relative to an optimal position; determining a direction of adjustment of the headset to lessen the offsets; and providing an instruction to perform the adjustment of the headset in the determined direction.

In accordance with the present disclosure, there is provided a non-transitory memory having stored thereon instructions which, when executed by a processor, cause the processor to use one or more of sensor(s) and/or camera(s) of a headset comprising a display module comprising an electronic display for displaying images to a user, to determine an offset of a current eye position of the user wearing the headset relative to an optimal eye position in an eyebox of the headset and a pitch offset based on facial landmarks; determine a direction of adjustment of the headset to lessen the offsets; and provide an instruction to perform the adjustment of the headset in the determined direction.

In accordance with the present disclosure, there is further provided a wearable display system comprising a headset and a processing module. The headset includes a headset body, a display module in the headset body and the display module comprising an electronic display for displaying images to a user of the headset. The processing module is configured to use the one or more sensor(s) and/or camera(s) to determine an offset of a current eye position versus nominal eye position and pitch offset based on facial landmarks, determine a direction of adjustment of the headset to lessen the offsets; and provide an instruction to perform the adjustment of the headset in the determined direction.

In some embodiments, eye tracking includes determining offsets up to six degrees of freedom (6DoF), including three translational offsets (horizontal, vertical, depth), a roll offset, a yaw offset, and an IPD offset. Additionally or in the alternative, face tracking includes determining the location of features of a user's face and a pitch offset. The locations of the features are tracked by the system to check for visibility of those features so they can be later captured by the camera and/or sensors for use in creating Social Presence. The role of a guidance algorithm is to convert current donning estimates into three results: 1) which type of guidance should be shown (e.g., roll pitch, adjust eye relief, etc.), 2) which direction should the user be guided (up/down, in/out, CW/CWW), and 3) what is the magnitude of correction.

Aside from creating Social Presence, another benefit of the method presented in the present disclosure is detection of features or objects which may make it difficult for the cameras or sensors to detect a user's gaze, facial features and/or facial expressions accurately. For purposes of this disclosure, users for whom the cameras and/or sensors will not be able to function properly are described as "marginal users." This is because the measurement of the specific feature or features do not fall within a range at which the cameras and/or sensors can function optimally. For example, pupil detection may be hindered by glare from glasses that the user is wearing. Another example of something that may hinder the processing of the cameras and/or sensors in some circumstances is facial hair, which may disguise, e.g., the corners of the user's mouth. If a user is determined to be a marginal user by a program, the program may resort to a default, such as a default gaze if a person is wearing glasses that create too much glare for proper pupil detection and tracking.

The present disclosure may include at least two algorithms, one for eye tracking and one for face tracking. An eye box may be moveable to create better alignment for eye tracking. An eye tracking system may track position and orientation of the user's eye. It may do so using, for example, an array of illuminators for illuminating the user's eye, typically with invisible light such as infrared light, a hot mirror for reflecting the infrared light scattered by the user's eye and eye region of the face, while transmitting visible light from an electronic display, and a camera for detecting an image of the eye with the pupil and reflections, sometimes called "glints," of the illuminators from the eye, for determining eye position and orientation. Herein, the term "eye region" denotes the area of the face including the eyes, and may include the eye brows, the nose bridge, the outer canthus of both eyes, and down to the cheek bone under both eyes. The eye region includes the eye itself and of particular interest to gaze tracking are the cornea, the iris, and the pupil. They eye tracking system may be configured to operate with an acceptable level of precision and fidelity of eye position and gaze angle determination. A headset itself may be moveable to create better alignment for eye tracking and/or face tracking.

The method of the present disclosure improves the efficiency with which a user may see and execute instructions on how to adjust a headset to an optimal position. This may be possible because it uses offsets for five degrees of freedom and a pitch offset. Thus, a user may be guided to fix the positioning using fewer steps than would otherwise be possible. The goal is to provide the best donning in the least amount of time with the lowest level of user frustration as possible. One way to do this is to allow for a margin of error in the placement of the head-mounted device, which may be represented by a bounding box. A bounding box may refer to a range of acceptable DoF (in mm, degrees, or some other form of measurement). Different bounding box thresholds may be employed depending on use cases. A perfect fit may not be required in some embodiments to limit disruption to the user.

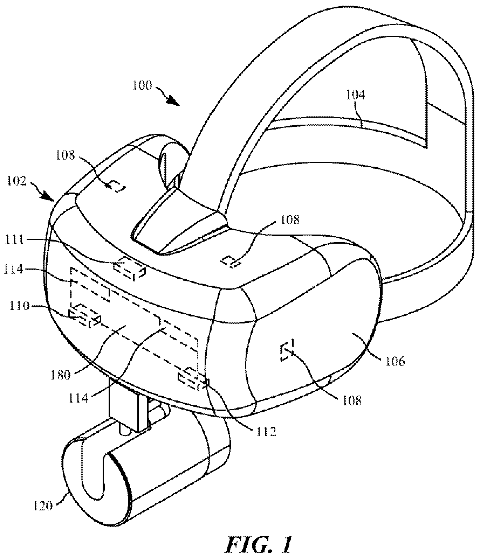

**FIG. 1** illustrates an example head-mounted device, also known as a headset, for a VR/AR display system. An HMD 100 is an example of an AR/VR wearable display system which encloses the user's face, for a greater degree of immersion into the AR/VR environment. The HMD 100 is an embodiment of a wearable display system. The function of the HMD 100 is to augment views of a physical, real-world environment with computer-generated imagery, and/or to generate entirely virtual 3D imagery. The HMD 100 may include a front body 102 and a band 104. The front body 102 is configured for placement in front of eyes of a user in a reliable and comfortable manner, and the band 104 may be stretched to secure the front body 102 on the user's head. A display system 180 may be disposed in the front body 102 for presenting AR/VR imagery to the user. Mounted on front body 102 may be components of HMD 100 that are useful and/or necessary to capture and display data in association with an AR/VR program. Sides 106 of the front body 102 may be opaque or transparent.

In some embodiments, the front body 102 includes locators 108 and an inertial measurement unit (IMU) 110 for tracking acceleration of the HMD 100, and position sensors 112 for tracking position of the HMD 100. The IMU 110 is an electronic device that generates data indicating a position of the HMD 100 based on measurement signals received from one or more measurement signals in response to motion of the HMD 100. Examples of position sensors 112 include: one or more accelerometers, one or more gyroscopes, one or more magnetometers, another suitable type of sensor that detects motion, a type of sensor used for error correction of the IMU 110, or some combination thereof. The position sensors 112 may be located external to the IMU 110, internal to the IMU 110, or some combination thereof.

The locators 108 are traced by an external imaging device of a virtual reality system, such that the virtual reality system can track the location and orientation of the entire HMD 100. Information generated by the IMU 110 and the position sensors 112 may be compared with the position and orientation obtained by tracking the locators 108, for improved tracking accuracy of position and orientation of the HMD 100. Accurate position and orientation is important for presenting appropriate virtual scenery to the user as the latter moves and turns in 3D space.

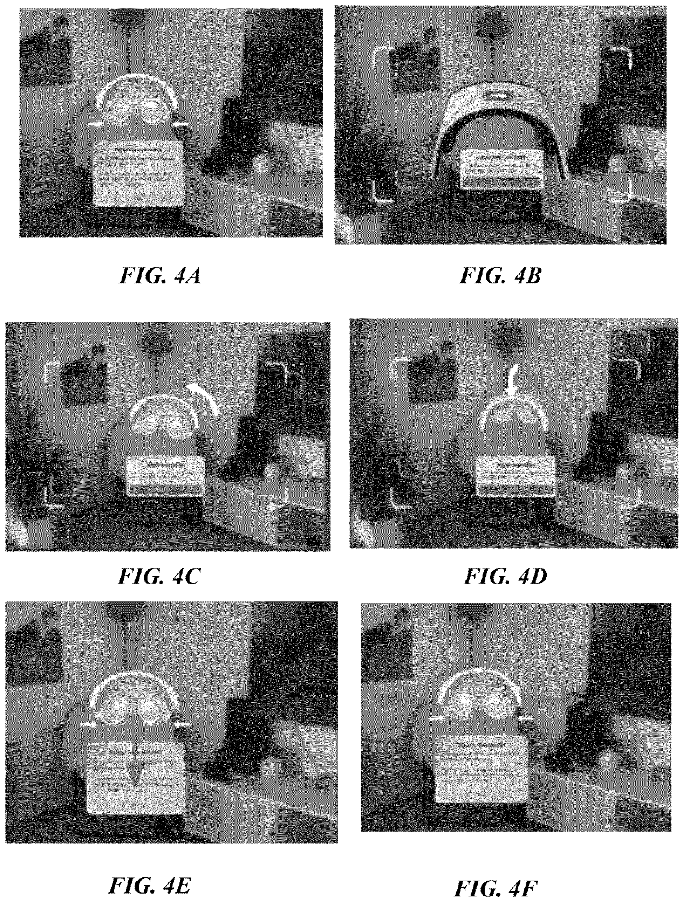

The HMD 100 may further include an eye tracking system 114 for determining orientation and position of a user's eyes in real time. The determined position of the user's eyes allows the HMD 100 to perform (self-)adjustment procedures described, which may include instructions given to the user of how to most efficiently adjust the HMD 100, as further illustrated in FIGS. 4A-F. The obtained position and orientation of the user's eyes also allows the HMD 100 to determine the gaze direction of the user and to adjust the image generated by the display system 180 accordingly. In one embodiment, the vergence, that is, the convergence angle of the user's eyes gaze, is determined. The determined gaze direction and vergence angle may also be used for real-time compensation of visual artifacts dependent on the angle of view and eye position. Furthermore, the determined vengeance and gaze angles may be used for interaction with the user, highlighting objects, bringing objects to the foreground, creating additional objects or pointers, etc. An audio system may also be provided including, e.g., a set of small speakers built into the front body 102.

The HMD 100 may include the eye tracking system 114 for tracking eye position and orientation, determining gaze angle and convergence angle, etc., the IMU 110 for determining position and orientation of the HMD 100 in 3D space, the DCA 111 for capturing the outside environment, the position sensor 112 for independently determining the position of the HMD 100, and the display system 180 for displaying AR/VR content to the user. The display system 180 may include an electronic display. This may be, for example and without limitation, a liquid crystal display (LCD), an organic light emitting display (OLED), an inorganic light emitting display (ILED), an active-matrix organic light-emitting diode (AMOLED) display, a transparent organic light emitting diode (TOLED) display, a projector, or a combination thereof. The display system 180 further includes an optics block 130, whose function is to convey the images generated by the electronic display 125 to the user's eye. The optics block may include various lenses, e.g., a refractive lens, a Fresnel lens, a diffractive lens, an active or passive Pancharatnam-Berry phase (PBP) lens, a liquid lens, a liquid crystal lens, etc., a pupil-replicating waveguide, granting structures, coatings, etc. The display system 180 may further include a varifocal module 135, which may be a part of the optics block 130. The function of the varifocal module 135 is to adjust the focus of the optics block 130 e.g. to compensate for vergence-accommodation conflict, to correct for vision defects of a particular user, to offset aberrations of the optics block 130, etc.

The HMD 100 may further include a face tracking system for tracking features and expressions on the user's face. The HMD 100 may include a camera 120 to capture facial data, particularly facial data from a lower portion of a person's face. This may be used, e.g., as an input to an algorithm use to calculate pitch offset and/or to create greater Social Presence.

The I/O interface 115 is a device that allows a user to send action requests and receive responses from the console 190. An action request is a request to perform a particular action. For example, an action request may be an instruction to start or end capture of image or video data or an instruction to perform a particular action within an application. The I/O interface 115 may include one or more input devices, such as a keyboard, a mouse, a game controller, or any other suitable device for receiving action requests and communicating the action requests to the console 190. An action request received by the I/O interface 115 is communicated to the console 190, which performs an action corresponding to the action request. In some embodiments, the I/O interface 115 includes an IMU that captures calibration data indicating an estimated position of the I/O interface 115 relative to an initial position of the I/O interface 115. In some embodiments, the I/O interface 115 may provide haptic feedback to the user in accordance with instructions received from the console 190. For example, haptic feedback can be provided when an action request is received, or the console 190 communicates instructions to the I/O interface 115 causing the I/O interface 115 to generate haptic feedback when the console 190 performs an action.

The console 190 may provide content to the HMD 100 for processing in accordance with information received from one or more of: the IMU 110, the DCA 111, the eye tracking system 114, and the I/O interface 115. In some embodiments, the console 190 includes an application store 155, a tracking module 160, and a processing module 165. Some embodiments of the console 190 may have different modules or components than this. Similarly, the functions described below may be distributed among components of the console 190 in a different manner than described in conjunction with FIG. 1.

The application store 155 may store one or more applications for execution by the console 190. An application is a group of instructions that, when executed by a processor, generates content for presentation to the user. Content generated by an application may be in response to inputs received from the user via movement of the HMD 100 or the I/O interface 115. Examples of applications include: gaming applications, presentation and conferencing applications, video playback applications, or other suitable applications.

The tracking module 160 may track movements of the HMD 100 or of the I/O interface 115, the IMU 110 or some combination thereof. The tracking module 160 may also calibrate the AR/VR system 150 using one or more calibration parameters and may adjusts one or more calibration parameters to reduce error in determination of the position of the HMD 100 or the I/O interface 115. Calibration performed by the tracking module 160 also accounts for information received from the IMU 110 in the HMD 100 and/or an IMU included in the I/O interface 115, if any. Additionally, if tracking of the HMD 100 is lost, the tracking module 160 may recalibrate some or all of the AR/VR system 150.

The processing module 165 executes applications within the AR/VR system 150 and receives position information, acceleration information, velocity information, predicted future positions, or some combination thereof, of the HMD 100 from the tracking module 160. Based on the received information, the processing module 165 determines content to provide to the HMD 100 for presentation to the user. Additionally, the processing module 165 performs an action within an application executing on the console 190 in response to an action request received from the I/O interface 115 and provides feedback to the user that the action was performed. The provided feedback may be visual or audible feedback via the HMD 100 or haptic feedback via the I/O interface 115.

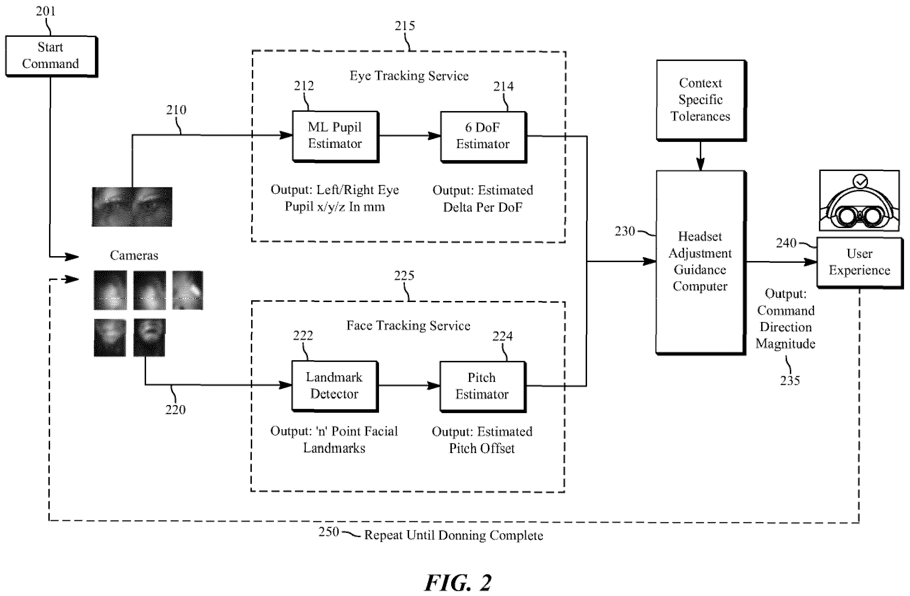

**FIG. 2** illustrates an example method for HMD or headset donning optimization. The method may begin at step 201, where a start command is initiated. In an embodiment, to initiate Headset Adjustment donning, a computer system issues a start command. This start command may be issued at a variety of times and in response to a variety of triggers. For example, it may begin as soon as a user dons a head-mounted device or when a user launches a particular application. The calibration may be continuous in some embodiments. Specifically, in an embodiment, Headset Adjustment may launch on system setup. This may ensure the user has properly donned the headset for the user's first experience and further give the user a sense of how the headset should feel. Since this is may happen at the beginning of each session, it may ensure the headset is properly donned each session. Another embodiment may launch upon first launch of a Social Presence or GFR enabled app or any other app that relies on eye tracking (ET). This may have the benefit of happening as the user is explicitly opting into using Social Presence, GFR, or any other app that relies on ET. A potential benefit of this may be that this would not add an extra step to a process of system setup where the process may already be long. Since, in some embodiments, the user would consent to running Headset Adjustment, having Headset Adjustment launch on system setup would also add an additional prompt during initial setup, separating the adjustment period from apps that will actually take advantage of the donning making it less likely that the user will understand the benefit that Headset Adjustment is adding. Lunching Headset Adjustment at the opening of app decreases this separation and makes the benefit more obvious to the user, making it more likely they utilize it. Another optional embodiment involves on-going monitoring while a Social Presence or GFR enabled app is running. In this scenario, Headset Adjustment would silently run in the background anytime a Social Presence/GFR app was actively running. The threshold for disrupting the user would be higher to minimize annoyance. This has the advantage that the features should always run optimally. For GFR enabled apps, eye tracking monitoring alone may be sufficient in some embodiments.

One or more cameras and/or one or more sensors may be located in positions to capture location and details of eyes and/or the rest of a user's face. At step 210, cameras and/or sensors may be used to capture eye location and movement are engaged by a program to be used as part of an eye tracking service 215. Eye tracking service 215 may comprise at least an ML Pupil Estimator 212 and a 6DoF Estimator 214. The ML Pupil Estimator 212 may output left and/or right eye pupil coordinates in three dimensions, e.g., x,y,z in mm. The 6DoF Estimator 214 may output estimated delta or change for each degree of freedom. In other words, based on the 3D coordinates for the left and/or right eye, the program estimates the current headset donning versus the nominal position and finds a delta from those two values. The eye tracking services 215 may be used to determine orientation and position of the user's eyes in real time. The position and orientation of the eyes obtained by the eye tracking services 215 may allow the program to determine the gaze and direction of the user and to adjust the image generated by a display system accordingly. In some embodiments, the vergence, that is, the convergence angle of the user's eye gaze, is determined by the system. The determined gaze direction and vergence angle may also be used for real-time compensation of visual artifacts dependent on the angle of view and eye position. Furthermore, the determined vergence and gaze angles may be used for interaction with the user, highlighting objects, bringing objects to the foreground, creating additional objects or pointers, etc. An audio system may also be provided including, e.g., a set of small speakers built into the front body.

Previously, subsequently, or concurrently with the actions of program running the eye tracking service 215, the program may engage a face tracking service 225. At step 220, cameras and/or sensors may be used to capture data related to the user's face, such as facial landmarks. Face tracking service 225 may comprise at least a landmark detector 222 and a pitch estimator 224. The landmark detector 222 may output 'n' point facial landmarks. In other words, the program may perform landmark detection on the lower portion of the face. Landmark detection at this stage may determine whether the camera is positioned such that the landmarks are visible to the camera. In an embodiment, the focus may be on visibility rather than on fitting the landmarks to a facial model. The purpose of this may be so that an avatar created to represent the user in a virtual environment may accurately mimic facial expressions. The pitch estimator 224 may output an estimated pitch offset. The pitch offset may be calculated by estimating the pitch of the headset versus the nominal position and calculating the difference between the two. Data processed by either or both of the eye tracking service 215 and the face tracking service 225 may be received by a Headset Adjustment guidance computer 230 which is programmed with context-specific tolerances, which may be determined from gathered data or machine learning algorithms. In some embodiments, the Headset Adjustment guidance computer 230 uses at least the data obtained from the eye tracking service 215 and the face tracking service 225 and the context specific tolerances to generate commands for direction and magnitude 235 needed to correct fit of HMD 100. The Headset Adjustment guidance computer combines the output from each service into a 7DoF estimate. Based on the current position, the computer determines the best instruction to give the user and the direction and magnitude of the correction that needs to be made. The commands for direction and magnitude 235 comprise instructions for direction and magnitude required to adjust the HMD 100 to be in the optimal location on the user's head. The commands for direction and magnitude 235 are then presented to the user as part of a user experience 240. After presentation of instructions to the user (in the form of commands for direction and magnitude 235), the user may make adjustments to the fit of HMD 100. At step 250, the process is then repeated, and continues to repeat until variation detected by the program running the eye tracking service 215 and the face tracking service 225 falls below a specified threshold based on the context specific tolerances. Particular embodiments may repeat one or more steps of the method of FIG. 2, where appropriate. Although this disclosure describes and illustrates particular steps of the method of FIG. 2 as occurring in a particular order, this disclosure contemplates any suitable steps of the method of FIG. 2 occurring in any suitable order. Moreover, although this disclosure describes and illustrates an example method for headset donning optimization including the particular steps of the method of FIG. 2, this disclosure contemplates any suitable method for headset donning optimization including any suitable steps, which may include all, some, or none of the steps of the method of FIG. 2, where appropriate. Furthermore, although this disclosure describes and illustrates particular components, devices, or systems carrying out particular steps of the method of FIG. 2, this disclosure contemplates any suitable combination of any suitable components, devices, or systems carrying out any suitable steps of the method of FIG. 2.

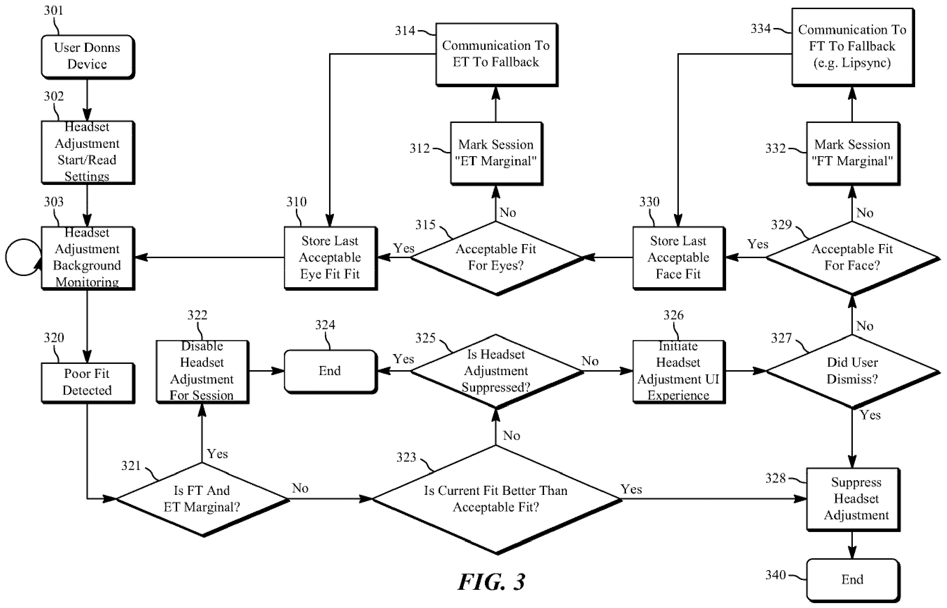

**FIG. 3** illustrates an example method of optimizing the fit of a headset using a computer. In step 301, a program detects that a user has donned a device. In step 302, Headset Adjustment (the example program) starts and/or begins to read settings. In step 303, Headset Adjustment performs background monitoring. Step 303 continues until, in step 320, a computer program detects a poor fit. In the same or another embodiment, Headset Adjustment runs an algorithm for each DoF and determines whether each passes or fails certain parameters. If the DoF is within an acceptable range, or passes, the computer may issue a stop command. Then, in step 321, the system determines whether the face tracking and the eye tracking are marginal. This means that there are features on the face of the user that make the optimization algorithms likely to be inaccurate, because, for one reason or another, one or more features of the user will be difficult to detect. For example, a user may be wearing glasses that reflect light in such a way that the eye tracking system cannot properly track the pupils of the user. When the program determines that the user is a marginal user because of an inability of the eye tracking program to work optimally, the system may switch to a default setting rather than run the rest of the program. Additionally or alternatively, the user may have facial features which are out of range of the camera or the sensors of the device. For example, if the face tracker determines that the cameras and/or sensors cannot adequately detect the features of the user's face, the program may be triggered to implement a lip-sync default mode. If the facial tracking and eye tracking are marginal, at step 322, Headset Adjustment is disabled for the session, the process ends at step 324, and an appropriate default may be set. If either or both of the facial tracking and the eye tracking are not marginal, the program determines if the current fit is better than an acceptable fit at step 323. If the current fit is better than the acceptable fit, at step 328, Headset Adjustment is suppressed, and the process ends at step 340. If the current fit, however, is not determined to be better than the acceptable fit, the program determines if Headset Adjustment is suppressed at step 325, which suppression may have been done by the user in settings or by a previous determination that further optimization is not efficient and/or possible. If Headset Adjustment has been suppressed, the process ends at step 324. If Headset Adjustment has not been suppressed, at step 326, the program initiates he Headset Adjustment user interface (UI) experience. Then, at step 327, the program determines if the user dismissed the program. If the answer is yes, the program suppresses Headset Adjustment at step 328 and the process ends at step 340. If, however, the answer is no, the program determines whether or not the fit is acceptable for the user's face at step 329. If the answer is no, at step 332, the session is marked "FT Marginal," meaning that the face tracking is marginal, and at step 334, communication is made to the face tracking program to fallback to a default setting that provides a next-best option to face tracking, e.g., lipsync. After step 334, or if the program determines that the fit is acceptable for the user's face at step 329, the last acceptable face fit will then be stored in step 330. Then, before or after the determination of whether the fit is acceptable for the user's face at step 329, at step 315, the program determines if the fit is acceptable for the user's eyes. If the answer is no, the session is marked "ET Marginal" at step 312, meaning that the eye tracking is marginal, and at step 314, communication is made to the eye tracking to fallback to a default setting that provides a next-best option to eye tracking. After step 314, or if it is determined that the fit is acceptable for the user's eyes at step 315, the program will store the last acceptable eye at step 310. After either or both of the last acceptable face fit and the last acceptable eye fit are stored, the program returns to Headset Adjustment background monitoring.

In some embodiments, the program may only run on initialization of the device, such as if the user determined this in settings. Particular embodiments may repeat one or more steps of the method of FIG. 3, where appropriate. Although this disclosure describes and illustrates particular steps of the method of FIG. 3 as occurring in a particular order, this disclosure contemplates any suitable steps of the method of FIG. 3 occurring in any suitable order. Moreover, although this disclosure describes and illustrates an example method for optimizing the fit of a headset including the particular steps of the method of FIG. 3, this disclosure contemplates any suitable method for optimizing the fit of a headset including any suitable steps, which may include all, some, or none of the steps of the method of FIG. 3, where appropriate. Furthermore, although this disclosure describes and illustrates particular components, devices, or systems carrying out particular steps of the method of FIG. 3, this disclosure contemplates any suitable combination of any suitable components, devices, or systems carrying out any suitable steps of the method of FIG. 3.

**FIGS. 4A-F** illustrate instructions that a program may implement for different types of donning guidance that may be used as part of this method. For example, as illustrated in Fig. 4A, one set of instructions may instruct a user to adjust inter-axial distance (IAD) by moving a right and left lenses closer together or farther apart. Another set of instructions, e.g., as illustrated in Fig. 4B, may instruct a user to adjust eye relief in or out. As illustrated in Fig. 4C, another set of instructions may instruct a user to adjust headset roll, or fix a crooked headset by rotating clockwise or counterclockwise. As illustrated in Fig. 4D, another set of instructions may instruct a user to adjust headset pitch by rotating the headset up or down. As illustrated in Fig. 4E, another set of instructions may instruct a user to adjust a headset up or down, while another, as illustrated, e.g., in Fig. 4F, may instruct a user to adjust the headset left or right. The specific combination and order of instructions will vary depending on what the program has determined will be the most efficient combination of tasks to fix the positioning of the headset.

In some embodiments, visual cues for the headset adjustment may include target images showing positions of both eyes relative to optimal positions. For example, the displayed images include generated target positions, which correspond to the positions and the IPD of the eyes of the current user, and generated current eyebox positions separated from the target positions by respective offsets. The user may adjust the headset body position and the distance between the display modules to reduce the offsets by matching the first current eyebox position to the corresponding first target position, and by matching the second current eyebox position to the corresponding second target position. In some embodiments, the display modules may be placed on translation stages which can be moved by a user, e.g,, by turning a dial located on the headset while looking at the electronic displays. The user may turn the dial until the distance between the current eyebox positions matches the distance between the target positions. Then, the user may adjust the headset left to right to superimpose both current positions with the corresponding target positions, ideally reducing the offsets to zero. This order of adjustment may be reversed, i.e. the left-to-right adjustment may be done first. Both adjustments may also be done iteratively, in turns.

### Systems and Methods

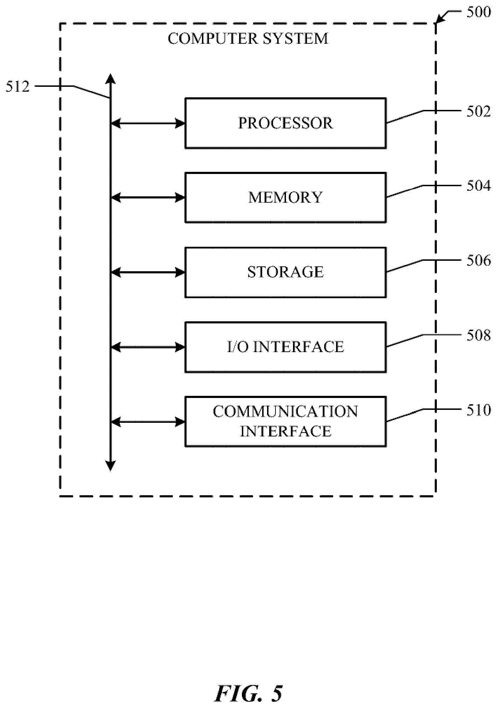

**FIG. 5** illustrates an example computer system 500. In particular embodiments, one or more computer systems 500 perform one or more steps of one or more methods described or illustrated herein. In particular embodiments, one or more computer systems 500 provide functionality described or illustrated herein. In particular embodiments, software running on one or more computer systems 500 performs one or more steps of one or more methods described or illustrated herein or provides functionality described or illustrated herein. Particular embodiments include one or more portions of one or more computer systems 500. Herein, reference to a computer system may encompass a computing device, and vice versa, where appropriate. Moreover, reference to a computer system may encompass one or more computer systems, where appropriate.

This disclosure contemplates any suitable number of computer systems 500. This disclosure contemplates computer system 500 taking any suitable physical form. As example and not by way of limitation, computer system 500 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 500 may include one or more computer systems 500; be unitary or distributed; span multiple locations; span multiple machines; span multiple data centers; or reside in a cloud, which may include one or more cloud components in one or more networks. Where appropriate, one or more computer systems 500 may perform without substantial spatial or temporal limitation one or more steps of one or more methods described or illustrated herein. As an example and not by way of limitation, one or more computer systems 500 may perform in real time or in batch mode one or more steps of one or more methods described or illustrated herein. One or more computer systems 500 may perform at different times or at different locations one or more steps of one or more methods described or illustrated herein, where appropriate.

In particular embodiments, computer system 500 includes a processor 502, memory 504, storage 506, an input/output (I/O) interface 508, a communication interface 510, and a bus 512. Although this disclosure describes and illustrates a particular computer system having a particular number of particular components in a particular arrangement, this disclosure contemplates any suitable computer system having any suitable number of any suitable components in any suitable arrangement.

In particular embodiments, processor 502 includes hardware for executing instructions, such as those making up a computer program. As an example and not by way of limitation, to execute instructions, processor 502 may retrieve (or fetch) the instructions from an internal register, an internal cache, memory 504, or storage 506; decode and execute them; and then write one or more results to an internal register, an internal cache, memory 504, or storage 506. In particular embodiments, processor 502 may include one or more internal caches for data, instructions, or addresses. This disclosure contemplates processor 502 including any suitable number of any suitable internal caches, where appropriate. As an example and not by way of limitation, processor 502 may include one or more instruction caches, one or more data caches, and one or more translation lookaside buffers (TLBs). Instructions in the instruction caches may be copies of instructions in memory 504 or storage 506, and the instruction caches may speed up retrieval of those instructions by processor 502. Data in the data caches may be copies of data in memory 504 or storage 506 for instructions executing at processor 502 to operate on; the results of previous instructions executed at processor 502 for access by subsequent instructions executing at processor 502 or for writing to memory 504 or storage 506; or other suitable data. The data caches may speed up read or write operations by processor 502. The TLBs may speed up virtual-address translation for processor 502. In particular embodiments, processor 502 may include one or more internal registers for data, instructions, or addresses. This disclosure contemplates processor 502 including any suitable number of any suitable internal registers, where appropriate. Where appropriate, processor 502 may include one or more arithmetic logic units (ALUs); be a multi-core processor; or include one or more processors 502. Although this disclosure describes and illustrates a particular processor, this disclosure contemplates any suitable processor.

In particular embodiments, memory 504 includes main memory for storing instructions for processor 502 to execute or data for processor 502 to operate on. As an example and not by way of limitation, computer system 500 may load instructions from storage 506 or another source (such as, for example, another computer system 500) to memory 504. Processor 502 may then load the instructions from memory 504 to an internal register or internal cache. To execute the instructions, processor 502 may retrieve the instructions from the internal register or internal cache and decode them. During or after execution of the instructions, processor 502 may write one or more results (which may be intermediate or final results) to the internal register or internal cache. Processor 502 may then write one or more of those results to memory 504. In particular embodiments, processor 502 executes only instructions in one or more internal registers or internal caches or in memory 504 (as opposed to storage 506 or elsewhere) and operates only on data in one or more internal registers or internal caches or in memory 504 (as opposed to storage 506 or elsewhere). One or more memory buses (which may each include an address bus and a data bus) may couple processor 502 to memory 504. Bus 512 may include one or more memory buses, as described below. In particular embodiments, one or more memory management units (MMUs) reside between processor 502 and memory 504 and facilitate accesses to memory 504 requested by processor 502. In particular embodiments, memory 504 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 504 may include one or more memories 504, where appropriate. Although this disclosure describes and illustrates particular memory, this disclosure contemplates any suitable memory.

In particular embodiments, storage 506 includes mass storage for data or instructions. As an example and not by way of limitation, storage 506 may include a hard disk drive (HDD), a floppy disk drive, flash memory, an optical disc, a magneto-optical disc, magnetic tape, or a Universal Serial Bus (USB) drive or a combination of two or more of these. Storage 506 may include removable or non-removable (or fixed) media, where appropriate. Storage 506 may be internal or external to computer system 500, where appropriate. In particular embodiments, storage 506 is non-volatile, solid-state memory. In particular embodiments, storage 506 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 506 taking any suitable physical form. Storage 506 may include one or more storage control units facilitating communication between processor 502 and storage 506, where appropriate. Where appropriate, storage 506 may include one or more storages 506. Although this disclosure describes and illustrates particular storage, this disclosure contemplates any suitable storage.

In particular embodiments, I/O interface 508 includes hardware, software, or both, providing one or more interfaces for communication between computer system 500 and one or more I/O devices. Computer system 500 may include one or more of these I/O devices, where appropriate. One or more of these I/O devices may enable communication between a person and computer system 500. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 508 for them. Where appropriate, I/O interface 508 may include one or more device or software drivers enabling processor 502 to drive one or more of these I/O devices. I/O interface 508 may include one or more I/O interfaces 508, where appropriate. Although this disclosure describes and illustrates a particular I/O interface, this disclosure contemplates any suitable I/O interface.

In particular embodiments, communication interface 510 includes hardware, software, or both providing one or more interfaces for communication (such as, for example, packet-based communication) between computer system 500 and one or more other computer systems 500 or one or more networks. As an example and not by way of limitation, communication interface 510 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 510 for it. As an example and not by way of limitation, computer system 500 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 500 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 500 may include any suitable communication interface 510 for any of these networks, where appropriate. Communication interface 510 may include one or more communication interfaces 510, where appropriate. Although this disclosure describes and illustrates a particular communication interface, this disclosure contemplates any suitable communication interface.

In particular embodiments, bus 512 includes hardware, software, or both coupling components of computer system 500 to each other. As an example and not by way of limitation, bus 512 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 512 may include one or more buses 512, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A computer-implemented method, comprising:
detecting that a user has donned a headset;
using eye-tracking sensors of the headset to capture eye-tracking data of the user's eyes;
using cameras of the headset to capture images of a lower portion of the user's face;
using the eye-tracking data to estimate six degrees-of-freedom (6DoF) offsets between the headset worn by the user and a predefined optimal donning position of the headset, the 6DoF offsets including three translation offsets, a roll offset, a yaw offset, and an inter-pupillary distance (IPD) offset;
using facial landmarks in the images to estimate a pitch offset indicating a difference in pitch between the headset worn by the user and the predefined optimal donning position of the headset;
generating, based on the 6DoF offsets and the pitch offset, one or more users instructions to guide the user to adjust the headset to be closer to the predefined optimal donning position of the headset.

2. The method of Claim 1, wherein the offset of the current eye position is determined by engaging an eye tracking program that detects pupil location to six degrees of freedom.

3. The method of Claim 1 or claim 2, wherein the generated instructions include adjusting roll and yaw.

4. The method of any preceding Claim, wherein the pitch offset value is determined by detecting one or more landmarks on the face of the user.

5. The method of claim 4, wherein the optimal face position is set to a default in response to a determination that one or more of the one or more landmarks on the face of the user do not fall within limits of the camera for detection.

6. The method of any preceding claim, wherein the method begins in response to the user opening an application.

7. The method of any preceding claim, wherein a program is engaged before the method begins and ends after a determination that the offset of the current eye position and the pitch offset are within set parameters.

8. The method of any preceding claim, wherein the determining of the direction of adjustment of the headset to lessen the offset of the current eye position and the determining of the direction of adjustment of the headset to lessen the pitch offset is done simultaneously.

9. One or more computer-readable non-transitory storage media embodying software that is operable when executed to:
detect that a user has donned a headset;
use eye-tracking sensors of the headset to capture eye-tracking data of the user's eyes;
use cameras of the headset to capture images of a lower portion of the user's face;
use the eye-tracking data to estimate six degrees-of-freedom (6DoF) offsets between the headset worn by the user and a predefined optimal donning position of the headset, the 6DoF offsets including three translation offsets, a roll offset, a yaw offset, and an inter-pupillary distance (IPD) offset;
use facial landmarks in the images to estimate a pitch offset indicating a difference in pitch between the headset worn by the user and the predefined optimal donning position of the headset;
generate, based on the 6DoF offsets and the pitch offset, one or more users instructions to guide the user to adjust the headset to be closer to the predefined optimal donning position of the headset.

10. The media of Claim 9, wherein the software is further operable when executed to determine the offset of the current eye position by engaging an eye tracking program that detects pupil location to five degrees of freedom.

11. The media of Claim 9 or 10, wherein the generated instructions include adjusting roll and yaw.

12. The media of one of Claims 9 to 11, wherein the pitch offset value is determined by detecting one or more landmarks on the face of the user.

13. The media of one of Claims 9 to 12, wherein the optimal face position is set to a default in response to a determination that one or more of the one or more landmarks on the face of the user do not fall within limits of the camera for detection.

14. The media of one of Claims 9 to 13, wherein the software is further operable when executed to determine the direction of adjustment of the headset to lessen the offset of the current eye position and determine the direction of adjustment of the headset to lessen the pitch offset simultaneously.

15. A system comprising:
one or more processors; and
one or more computer-readable non-transitory storage media coupled to one or more of the processors and comprising instructions operable when executed by one or more of the processors to cause the system to perform in accordance with any one of Claims 9 to 14.
